Europäisches Patentamt

European Patent Office

Office européen des brevets

(11) Veröffentlichungsnummer: **0 399 061**
**A1**

(19)

(12) **EUROPÄISCHE PATENTANMELDUNG**

(21) Anmeldenummer: **89109162.1**

(22) Anmeldetag: **22.05.89**

(51) Int. Cl.5: **G01K 13/00**

(43) Veröffentlichungstag der Anmeldung:
**28.11.90 Patentblatt 90/48**

(84) Benannte Vertragsstaaten:
**CH DE FR GB LI NL**

(71) Anmelder: **Hellige GmbH**
**Postfach 728 Heinrich-von-Stephan-Strasse 4**
**D-7800 Freiburg im Breisgau(DE)**

(72) Erfinder: **Hindelang, Fritz, Dr., Dipl.-Phys.**
**Kapellenweg 1**
**D-8017 Ebersberg(DE)**
Erfinder: **Leist, Helmut, Dipl.-Ing.**
**Tannenweg 45a**
**D-7808 Waldkirch(DE)**

(74) Vertreter: **TER MEER - MÜLLER - STEINMEISTER & PARTNER**
**Mauerkircherstrasse 45**
**D-8000 München 80(DE)**

(54) **Verfahren und Vorrichtung zur transkutanen ZHF-Temperaturmessung.**

(57) Das Verfahren und die Vorrichtung zur transkutanen Zero-Heat-Flow-Temperaturmessung ermöglicht eine wesentliche Verkürzung der Meßzeit und beruhen auf dem Gedanken, eine lokale Überwärmung der Haut, insbesondere bei zuvor unterkühlten Personen oder schlecht durchblutetem Gewebe, durch eine geregelte Erwärmung zu hyperämisieren. Um Verfälschungen des Meßergebnisses durch Wärmequerfluß zu unterbinden, wird eine die Temperaturmeßstelle flächig und ringförmig umgebende, vorzugsweise flexibel gestaltete Heizzone (4) vorgesehen, die unmittelbar auf der Haut wirkt, ohne eine übermäßige Erwärmung des Gesamtsensors zu bewirken. Durch Verwendung eines dünnen Heizfolienrings wird eine sehr flache flexible Bauweise bei gleichzeitig verringertem Durchmesser solcher Sensoren erreicht. Die Heizringzone wird in gleichem Sinn für die Nachstellung der ZHF-Temperatur verwendet.

EP 0 399 061 A1

FIG .1

# Verfahren und Vorrichtung zur transkutanen ZHF-Temperaturmessung

Die Erfindung betrifft ein Verfahren zur transkutanen ZHF-Temperaturmessung mittels eines Elektrothermometers sowie eine zur Durchführung des Verfahrens geeignete Vorrichtung gemäß dem Oberbegriff des Patentanspruchs 4.

Unter Zero-Heat-Flow-(ZHF)-Temperaturmessung (in deutsch: "Wärmefluß-Nullverfahren") wird eine Methode zur Schaffung einer Zone ohne Wärmefluß vom Körperinneren durch die Haut verstanden. Dadurch wird die Körperinnentemperatur bis an die Hautoberfläche gebracht, wo sie mit Hilfe eines einfachen Elektrothermometers, z. B. eines NTC-Widerstands, gemessen werden kann. Da das Verfahren zuerst im angelsächsischen Sprachraum angewendet wurde (vgl. beispielshalber US-A—3 933 045) hat sich der Ausdruck Zero-Heat-Flow-Methode (ZHF-Methode) oder auch Deep-Body-Temperaturmessung durchgesetzt.

Für die ZHF-Temperaturmessung ist ein schichtförmig aufgebauter transkutaner Sensor bekannt geworden, bei dem eine Heizfolie auf der dem Körper abgewandten Außenseite des Sensors angebracht ist. Der Nachteil der großen Wärmekapazität - der Sensor hat einschließlich Silicongummiauskleidung eine Größe von 60 x 60 x 6 mm³ - wird durch Vorheizen des Sensors auf 37°C im Standby-Betrieb gemindert (vgl. Clinical Science (1973), 44, 81-86). Schwierigkeiten ergeben sich jedoch durch eine langsame Erwärmung der Haut, insbesondere bei schlechter Durchblutung, z. B. bei Kälte.

Die Verwendung relativ großflächiger Sensoren war auch zur Verringerung der Umwelteinflüsse durch seitlichen Wärmetransport geboten. Zur Verbesserung schlugen deshalb TOGAWA und NEMOTO (vgl. Med. and Biol. Engn., May 76, 361) vor, durch eine metallische Kapsel die Wärme vom Heizelement ringförmig auf die Haut zu übertragen, um dadurch den seitlichen Wärmeabfluß zu begrenzen. Dies führte aber zu einem relativ sehr dicken (12 mm hohen) und starren Aufnehmer mit einem Durchmesser von immer noch 50 mm, weil sich anders der seitliche Wärmefluß nicht ausreichend verringern ließ.

Der Erfindung liegt damit die Aufgabe zugrunde, ein Verfahren und eine Vorrichtung zur transkutanen Zero-Heat-Flow-Temperaturmessung zu schaffen, durch die sich in relativ kurzer Zeit zuverlässige Meßergebnisse erzielen lassen trotz einer wesentlichen Verringerung der Baugröße des Sensors.

Das Verfahren zur transkutanen ZHF-Temperaturmessung mittels eines Elektrothermometers ist erfindungsgemäß dadurch gekennzeichnet, daß die Meßstelle in Abhängigkeit von der Haut- und/oder Umgebungstemperatur in einer flächigen Ringzone um die Meßstelle thermisch hyperämisiert wird, wobei der radiale Abstand zwischen der ringförmigen Heizzone und der Temperaturmeßstelle sowie die Breite der Heizzone ausreichend groß gewählt sind, um eine Störbeeinflussung der Temperaturmessung zu unterbinden bzw. um eine wirkungsvolle Wärmeübertragung auf die Haut sicherzustellen.

Die erfindungsgemäße Vorrichtung zur transkutanen ZHF-Temperaturmessung weist die im Patentanspruch 4 angegebenen Merkmale auf und besteht im wesentlichen aus einem Schichtaufbau mit einem zentral angeordneten Temperaturmeßelement, das von einer isolierenden Schicht, einer darüber angeordneten abdeckenden Wärmeleit- und Abschirmschicht sowie von einer die Meßstelle ringförmig umgebenden Heizeinrichtung gebildet ist. Die Heizeinrichtung besteht im wesentlichen aus einem dünnen Heizfolienring, der das Temperaturmeßelement in einem Radialabstand und mit einer Ringzone umgibt, die beide ausreichend groß sind, um die erwünschte Hyperämisierung zu erreichen und um einen radialen Wärmefluß unter dem Heizring zum Temperaturmeßelement zu unterbinden. Die Hauttemperatur in der Umgebung der Meßstelle wird durch eine Temperaturmeß- und -regeleinrichtung erfaßt, welche die Heiztemperatur des Heizfolienrings zu Beginn eines Meßvorgangs auf eine Temperatur einstellt, die eine Erwärmung der Meßstelle bis zum Erreichen einer erhöhten Hyperämisierungstemperatur (z. B. 43°C) ermöglicht, woraufhin die Heiztemperatur dann auf dieser erreichten Temperatur für z. B. zwei Minuten gehalten und anschließend auf die ZHF-Meßtemperatur nachgeführt wird.

Durch thermische Hyperämisierung, die von der Hauttemperatur abhängig gemacht wird, wird der kapilläre Blutfluß unter dem Temperatursensor verstärkt. Damit erhöht und beschleunigt sich auch der Wärmeaustausch vom Körperinneren zur Oberfläche. Auf diese Weise wird die bisher sehr störende Einlaufzeit (Erwärmungszeit) stark vermindert. Der Ring, vorzugsweise aus Heizfolie wird in Radialrichtung ca. 10 mm über die thermische Isolierung des Hauttemperaturfühlers nach außen gezogen. Der Gesamtaufbau des Sensors wird damit sehr dünn und flexibel. Durch die Verringerung des Durchmessers z. B. auf 30 bis 40 mm können auch Messungen an Kindern und/oder an speziellen Körperstellen, z. B. an der Glabella (Stirnfleck zwischen den Augenbrauen) durchgeführt werden.

Nach dem erfindungsgemäßen Prinzip durchgeführte Messungen zeigen, daß eine Erwärmung des Aufnehmers auf 43°C und für ca. 120 s zu einer Verkürzung der Einlaufzeit auf weniger als 5 min führte. Die bisher sehr störende lange Einlaufzeit (Erwärmungszeit) von ca. 15 bis 30 min wird also sehr deutlich vermindert.

Bei unterkühlten Patienten oder bei schlechter peripherer Durchblutung können jedoch Temperaturwerte im Bereich von 43°C schon zu einem lokalen Wärmestau führen, dessen Abbau bei bisher bekannten ZHF-Sensoren zu einer noch längeren Einlaufzeit führte als bei der Anwendung anderer Maßnahmen zur ausreichenden Erwärmung des Meßbereichs. Durch die erfindungsgemäße Einstellung und Regelung der Erwärmungstemperatur in Abhängigkeit von der zu Beginn gemessenen Hauttemperatur ließ sich auch bei solchen "Problempersonen" eine ganz wesentliche Reduzierung der Einlaufzeit bis zum Erreichen einer ausreichenden Hyperämisierung erzielen, die die Voraussetzung für zuverlässige Meßergebnisse ist.

Ausführungsbeispiele der Erfindung werden nachfolgend unter Bezug auf die Zeichnung näher erläutert. Es zeigen:

Fig. 1 einen transkutanen ZHF-Temperatursensor mit erfindungsgemäßen Merkmalen,

Fig. 2 einen sehr flachen, kreisscheibenförmigen ZHF-Temperatursensor erfindungsgemäßer Bauart, und

Fig. 3 ein Betriebsablaufdiagramm.

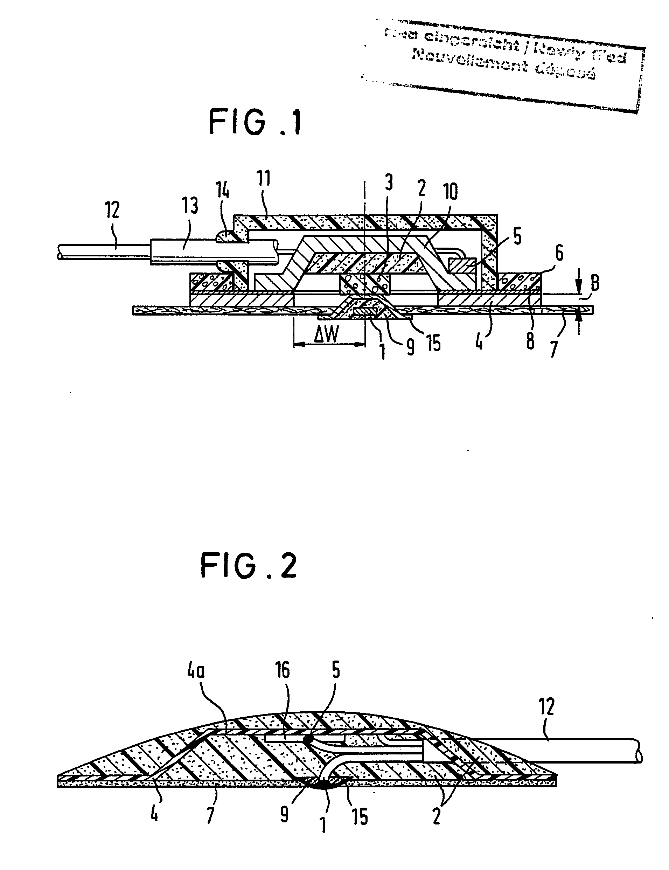

In der Fig. 1 bezeichnen die angegebenen Bezugshinweise folgende Teile oder Baugruppen eines erfindungsgemäßen transkutanen ZHF-Temperatursensors:

1 Temperaturmeßelement, z. B. NTC-Meßelement

2 thermische Isolierung

3 Andruckfederelement, z. B. aus synthetischem Schaumstoff

4 Heizfolienring als erstes Heizelement

5 Heiztemperatur-Meßelement und zweites Heizelement

6 äußerer Schaumstoffring

7 Gewebefolie

8 Wärmeleitung aus Kupferfolie

9 Kunstharzmasse

10 Abdeckhut, z. B. aus Al

11 Deckel aus Kunstharz, z. B. Delrin®

12 Leitung zur Stromzufuhr und Signalableitung

13 Knickschutzhülle für die Leitung 12

14 Leitungsdurchführung

15 Kupferhütchen zur Verbesserung des Wärmeübergangs Haut zu Temperaturmeßelement 1

$\Delta W$ Mindestabstand zwischen Temperaturmeßelement 1 und Innendurchmesser des Heizfolienrings 4

B axiale Breite des Heizfolienrings 4.

Die in Fig. 1 dargestellte konstruktive Gestaltung eines erfindungsgemäßen ZHF-Temperatursensors hat gegenüber bekannten Sensoren dieser Art vor allem den Vorteil, daß der seitliche Wärmefluß nicht nur wie bisher durch die Größe des Aufnehmers verringert wird, sondern dadurch, daß die Heizung, also der Heizfolienring 4, direkt bzw. unter Zwischenschaltung der dünnen Gewebefolie 7 an der Haut anliegen, die dadurch gleichzeitig einen Teil der thermischen Isolierung bildet. Das Schaumstoffederelement 3 drückt den NTC-Temperatursensor 1 unter geringem Andruck gegen die Meßstelle. Dies ist ein deutlicher Vorteil gegenüber bekannten Lösungen, bei denen unter anderem ein durch einen relativ kräftigen Federbügel angedrücktes Temperaturmeßele ment verwendet wird, wodurch die kapilläre Blutzufuhr insbesondere an empfindlichen Meßstellen abgedrückt oder zumindest behindert werden kann.

Der hutartige Wärmeschutz 10 z. B. aus Silber (Ag) hat neben der gleichmäßigen Wärmeverteilung auch die Funktion des mechanischen Schutzes für das Temperaturmeßelement 1 sowie für die Leitungsanschlüsse. Die minimale Größe des Sensors, insbesondere dessen Durchmesser, ergibt sich vor allem aus der thermischen Leitfähigkeit der Haut, die im wesentlichen den thermischen Widerstand zwischen dem NTC-Meßelement 1 und dem Heizring 4 sowie zur Umgebung bestimmt. Der Abstand $\Delta W$ und die Breite B werden so gewählt, daß einerseits eine ausreichende Hyperämisierung der Meßstelle erreicht wird, andererseits aber eine Temperaturverfälschung unter dem Meßelement 1 die Umgebung bzw. bei Heiztemperaturversatz durch den Heizring 4 ausgeschlossen ist.

Bei der sehr flachen linsenförmigen Ausführungsform eines ZHF-Temperatursensors nach Fig. 2 ist vor allem eine flexible Folienheizung das hervorstechende Merkmal, welche kreisscheibenförmig im Bereich des unteren äußeren Rands den Heizfolienring 4 bildet und dann nach innen (oben) gewölbt ist. In diesem Bereich 4a kann die Heizfolie auch streifen- oder netzförmig gestaltet sein. Im Bereich des Heizfolienrings 4 ist eine relativ breite Auflage auf der Haut gegeben, wobei unter Verwendung einer Klebefolie anstelle der Gewebefolie 7 eine gute Verbindung zur Haut sichergestellt werden kann. Der äußere Bereich der Heizfolie ist durch eine entsprechend linsenförmig gestaltete Kunstharzmasse überdeckt, die außen poliert sein kann. Der innere Bereich, der ebenfalls durch die gleiche oder eine andere Kunstharzmasse gebildet sein kann, stellt die thermische Isolierung dar. Das Heiztemperatur-Meßelement bzw. zweite Heizelement 5 steht über ein Metallplättchen 16 in gut wärmeleitender Verbindung mit dem Bereich 4a der Heizfolie. Das Kupferhütchen 15 zur Verbesserung des Wärmeübergangs zwischen der Haut und dem Temperaturmeßelement 1 ist auf die flache Gestalt des Aufnehmers angepaßt.

Die äußere Kunststoffummantelung bei der Ausführungsform nach Fig. 2 bzw. der Deckel 11 aus Kunstharz bei der Ausführungsform nach Fig. 1 dient gleichzeitig als Leitungsbefestigung. Knickprobleme werden damit vermieden, insbesondere auch durch einen kleineren Hebelarm, da die Leitung näher zum Zentrum hin fixiert ist und nicht - wie bisher -am Rand des Sensors. Dadurch verringert sich die Gefahr eines unbeabsichtigten Lösens des Aufnehmers.

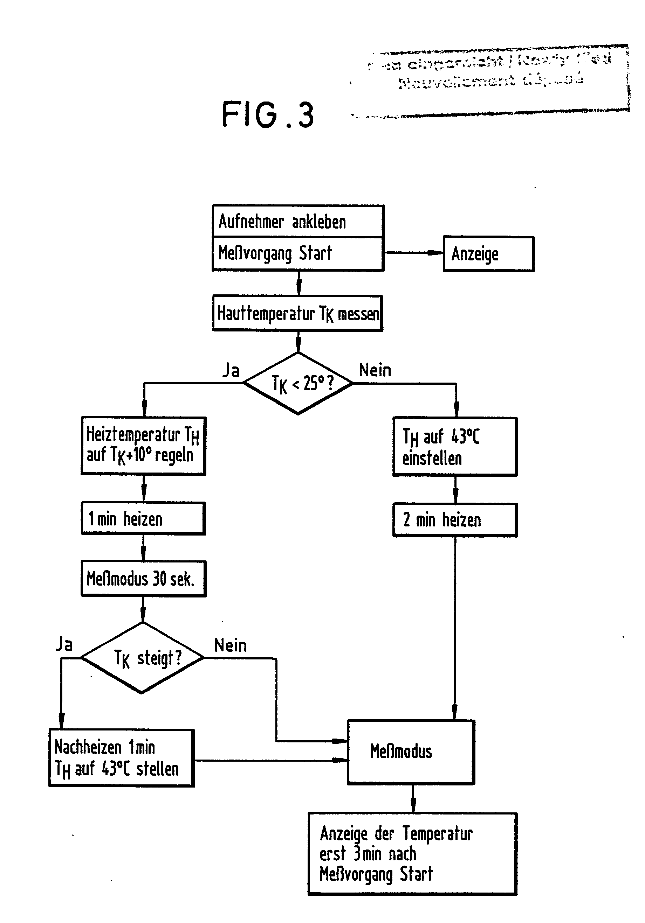

Der Ablauf eines Meßvorgangs wird nachfolgend mit Bezug auf Fig. 3 erläutert:
Zunächst wird der Sensor nach Fig. 1 oder Fig. 2 auf die Haut aufgeklebt, und es wird die aktuelle Hauttemperatur mittels des Temperaturmeßelements 1 gemessen. Sofern nach einer bestimmten Zeit, die ebenfalls von der zu Beginn gemessenen Hauttemperatur abhängig sein kann (z. B. 10 s), die gemessene Temperatur kleiner ist als 25°C oder kleiner ist als eine andere experimentell zu bestimmende Mindesttemperatur, wird die Heiztemperatur z. B. auf die Hauttemperatur zu Beginn plus 10 bis 15°C eingestellt und die Meßstelle wird für 1 bis 3 min, vorzugsweise für 2 min, erwärmt. Sodann folgt ein Prüfvorgang. Ist eine Temperatur der Meßstelle von $T_k > 25°C$ erreicht, so wird die Heiztemperatur $T_H$ von z. B. 43°C, also die Hyperämisierungstemperatur, eingestellt und der Meßvorgang kann nach einer zusätzlichen Hyperämisierungszeit von z. B. 2 min beginnen. Die Temperatur $T_H$ wird auf die Meßtemperatur des Fühlers 1 nachgeführt, gegebenenfalls mit einem von der Umgebungstemperatur abhängigen Versatz.

Das erfindungsgemäße transkutane ZHF-Temperaturmeßverfahren und Sensoren der beschriebenen Art eignen sich insbesondere für nichtinvasive Langzeitmessung anstelle der bisher erforderlichen und üblichen rektalen Messung sowie für diagnostische Zwecke, z. B. bei der Überwachung der Wehentätigkeit, für differentialdiagnostische Temperaturmessungen (Rechts-Links-Vergleich) unter anderem in der Krebsvorsorge sowie bei der Überwachung von Organmetabolismen. Im letzten Fall muß allerdings sichergestellt sein, daß die überwachten Organe nicht durch Fettgewebe abgeschirmt sind.

Gewerbliche Anwendbarkeit des Verfahrens ist in Sport- und Trainingszentren gegeben, wo z. B. die Muskelaktivität selektiv bei Belastungstests überwacht werden soll.

**Ansprüche**

1. Verfahren zur transkutanen ZHF-Temperaturmessung mittels eines Elektrothermometers, **dadurch gekennzeichnet,** daß die Meßstelle in Abhängigkeit von der Haut- und/oder Umgebungstemperatur durch selektive flächige Wärmezufuhr um eine Meßstelle elektrothermisch hyperämisiert wird.

2. Verfahren nach Anspruch 1, **dadurch gekennzeichnet,** daß die Hyperämisierung, in Abhängigkeit von der Hauttemperatur und/oder der Umgebungstemperatur, im Bereich der Meßstelle durch eine die Temperaturmeßstelle in einem Abstand (ΔW) und in einer axialen Breite (B) ringförmig umgebende Heizzone erfolgt, die ausreichend groß sind, um eine Störbeeinflussung der transkutanen Temperaturmessung durch Wärmequerfluß zu unterbinden.

3. Verfahren nach Anspruch 1 oder 2, **dadurch gekennzeichnet,** daß die Hyperämisierung zu Beginn für eine Zeit von etwa 2 min auf einer Temperatur erfolgt, die deutlich über der Kerntemperatur liegt, vorzugsweise bei einer Temperatur von 41 bis 43°C.

4. Vorrichtung zur transkutanen ZHF-Temperaturmessung mit einem Schichtaufbau, bestehend aus
- einem elektrischen Temperaturmeßelement (1) in direktem oder gut wärmeleitendem Kontakt mit der Meßstelle auf der Haut,
- einer das Temperaturmeßelement oberseitig überdeckenden thermisch isolierenden Schicht (2),
- einer die isolierende Schicht (2) hutartig abdeckenden Abschirmschicht sowie mit
- einer Heizeinrichtung (5) zur Erwärmung eines die Meßstelle ringförmig umgebenden Gewebebereichs,
**gekennzeichnet durch**
- einen mit der Heizeinrichtung (5) verbundenen flächigen Heizfolienring (4), der das Temperaturmeßelement (1) in einem Radialabstand (ΔW) und in einer Breite (B) umgibt, die ausreichend groß sind, um einen radialen Wärmefluß vom Heizfolienring (4) zum Temperaturmeßelement (1) zu unterbinden und durch
- eine Temperaturmeß- und -regeleinrichtung, welche die Hauttemperatur in der Umgebung der Meßstelle erfaßt und die Heiztemperatur des Heizfolienrings (4) zu Beginn eines Meßvorgangs auf eine Temperatur einstellt, die eine Erwärmung der Meßstelle bis zum Erreichen einer Hyperämisierungstemperatur ermöglicht und die Heiztemperatur dann für eine vorgegebene Zeitdauer auf einer einstellbaren Hyperämisierungstemperatur hält und danach die ZHF-Temperatur entsprechend nachführt.

5. Vorrichtung nach Anspruch 4, **gekennzeichnet durch** eine das Temperaturmeßelement (1) auf der der Haut abgewandten Seite hutartig überdeckenden Abschirmung (15) aus Metall, vorzugsweise aus Kupfer, Silber oder Aluminium.

6. Vorrichtung nach Anspruch 4 oder 5, **gekennzeichnet durch** einen mechanisch steifen Kunststoffdeckel (11), der den Schichtaufbau überdeckt und als Montage- und Halteelement und gleichzeitig als Kabeldurchführhalter dient.

7. Vorrichtung nach Anspruch 4, **gekennzeichnet durch** ein auf das Temperaturmeßelement (1) wirkendes Federelement (3) aus flexiblem Kunstharzschaum, welches das Temperaturmeßelement mit schwachem Andruck gegen die Meßstelle auf der Haut vorspannt.

8. Vorrichtung nach Anspruch 4, **dadurch gekennzeichnet,** daß die Abschirmschicht (10) die isolierende Schicht (2) topfartig überdeckt und gleichzeitig zur Wärmeleitung dient.

9. Vorrichtung nach Anspruch 4, **dadurch gekennzeichnet,** daß der flächige Heizfolienring um die Meßstelle zumindest im Randbereich flexibel gestaltet ist zur formschlüssigen Anpassung an gewölbte Körperteile.

10. Vorrichtung nach Anspruch 4 oder 9, **dadurch gekennzeichnet,** daß der Heizfolienring aus einer Heizwiderstandsschicht mit Folienträger besteht, die durch eine metallische Wärmeleitfolie (8) überdeckt ist.

# FIG .1

# FIG .2

09 162.1
GMBH
EP

# FIG.3

```
┌─────────────────────────┐
│ Aufnehmer ankleben      │
├─────────────────────────┤        ┌──────────┐
│ Meßvorgang Start        │───────▶│ Anzeige  │
└─────────────────────────┘        └──────────┘
            │
            ▼
┌─────────────────────────┐
│ Hauttemperatur TK messen│
└─────────────────────────┘
            │
      Ja    ▼    Nein
   ◀────◇ TK < 25°? ◇────▶
   │                     │
   ▼                     ▼
┌──────────────────┐  ┌──────────────────┐
│ Heiztemperatur TH│  │ TH auf 43°C      │
│ auf TK+10° regeln│  │ einstellen       │
└──────────────────┘  └──────────────────┘
   │                     │
   ▼                     ▼
┌──────────────┐      ┌──────────────┐
│ 1 min heizen │      │ 2 min heizen │
└──────────────┘      └──────────────┘
   │                     │
   ▼                     │
┌──────────────────┐     │
│ Meßmodus 30 sek. │     │
└──────────────────┘     │
   │                     │
   ▼                     │
  Ja          Nein       │
 ◀──◇ TK steigt? ◇───┐   │
 │                   │   │
 ▼                   │   │
┌──────────────────┐ │   │
│ Nachheizen 1min  │ │   │      ┌──────────┐
│ TH auf 43°C      │─┴───┴─────▶│ Meßmodus │
│ stellen          │            └──────────┘
└──────────────────┘                 │
                                     ▼
                    ┌────────────────────────────┐
                    │ Anzeige der Temperatur      │
                    │ erst 3min nach              │
                    │ Meßvorgang Start            │
                    └────────────────────────────┘
```

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | MEDICAL & BIOLOGICAL ENGINEERING & COMPUTING, Band 26, Nr. 4, Juli 1988, Seiten 456-459, IFMBE, Stevenage, Herts, GB; T. NEMOTO et al.: "Improved probe for a deep body thermometer" * Seiten 456-459 * | 1,4 | G 01 K 13/00 |
| A | IDEM --- | 2,7,8 | |
| Y | DE-A-3 527 942 (FRAUNHOFER-GESELLSCHAFT) * Spalte 3, Zeilen 4-7,10-14,44-52; Spalte 4, Zeilen 60-68; Spalte 5, Zeilen 26-41; Fig. * --- | 1,4 | |
| A | FR-A-2 580 806, (GOUAULT) * Seite 1, Zeilen 17-21; Seite 4, Zeilen 5-13; Fig. * --- | 1,4 | |
| A | US-A-3 915 003 (R.P. ADAMS) * Spalte 22, Zeile 39 - Spalte 24, Zeile 2; Figuren 13,14 * --- | 1,4 | RECHERCHIERTE SACHGEBIETE (Int. Cl.5) |
| D,A | US-A-3 933 045 (NAT. RESEARCH DEVELOPM. CORP) * Spalte 2, Zeilen 3-20; Spalte 4, Zeilen 2-4; Fig. * --- | 1 | G 01 K 1 G 01 K 13 |
| D,A | MEDICAL AND BIOLOGICAL ENGINEERING, May 1976, Seiten 361-363; "A modified internal temperature measurement device" * Insgesamt * ----- | 1,5,7,8 | |

Der vorliegende Recherchenbericht wurde für alle Patentansprüche erstellt

| Recherchenort | Abschlußdatum der Recherche | Prüfer |
|---|---|---|
| DEN HAAG | 01-02-1990 | RAMBOER P. |